# EUROPEAN PATENT APPLICATION

(11) **EP 3 249 981 A1**
(43) Date of publication of application: **29.11.2017**
(21) Application number: 15878583.2
(22) Date of filing: 18.09.2015
(51) Int. Cl.: H04W 52/18, H04L 29/08, H04L 29/06, H04W 84/12

(54) **METHOD AND APPARATUS FOR CONFIGURING WIRELESS ROUTER**

(30) Priority: 22.01.2015 CN 201510033166
(71) Applicant: ZTE Corporation, Shenzhen, Guangdong 518057 (CN)
(72) Inventor: PENG, Kai, Shenzhen Guangdong 518057 (CN)
(74) Representative: Novagraaf Technologies
(86) International application number: PCT/CN2015/090035
(87) International publication number: WO 2016/115914

(57) **Abstract**

A method and device for configuring a wireless router is provided. The method includes that: an identifier of each of at least one user equipment accessing a wireless router is acquired; a configuration strategy of a working mode of the wireless router is determined at least according to the identifier of each of at least one user equipment, and the working mode at least includes: a remote control mode and a wireless access parent control mode; the configuration strategy is configured. By embodiments of the present invention, a problem in the related art that a configuration of a working mode of the wireless router is tedious, which causes inconvenience to user operations is solved, and the complexity degree of configuration of the working mode of the wireless router is reduced, and comfortable experience is brought to users.

## Description

### Technical Field

The present invention relates to the field of intelligent equipment, and in particular to a method and device for configuring a wireless router

### Background

The wireless router becomes a necessary internet surfing device for families, and the wireless router is also provided with some advanced functions other than a basic internet surfing service. For example, parents control their children to surf the internet or remotely control the wireless router and the like. These advanced functions of the wireless router are started, worked on standby or closed according to actual requirements of users. For one example, when an owner goes back home, a remote control function is no longer needed to be started, and a risk of being invaded by a hacker is caused by keeping this function open. For another example, when the parents leave the home, the function of controlling the internet surfing of the children is required to be started. Similar to the operations (such as starting, standby or closing) of the advanced functions of the wireless router, since each configuration process is complicated, users have to select the wireless router to always keep in a default working mode and accept possible risk or inconvenience.

For a problem in the related art that a configuration of a working mode of the wireless router is tedious, which causes inconvenience to user operations, there has been no effective solution yet.

### Summary

At least some embodiments of the present invention provide a method and device for configuring a wireless router, so as at least to partially solve a problem in the related art that a configuration of a working mode of the wireless router is tedious, which causes inconvenience to user operations.

In an embodiment of the present invention, a method for configuring a wireless router is provided, which includes that: acquiring an identifier of each of at least one user equipment accessing a wireless router; determining a configuration strategy of a working mode of the wireless router at least according to the identifier of each of at least one user equipment, and the working mode at least includes: a remote control mode and a wireless access parent control mode; configuring the configuration strategy.

In one embodiment, determining the configuration strategy of the working mode of the wireless router at least according to the identifier of each of the at least one user equipment includes: determining that the identifier of each of the at least one user equipment includes a preset identifier; determining the configuration strategy of the working mode of the wireless router as a first configuration strategy, and the first configuration strategy includes at least one of: a remote control mode to be closed or standby and a wireless access parent control mode to be closed or standby.

In one embodiment, determining the configuration strategy of the working mode of the wireless router at least according to the identifier of each of the at least one user equipment includes: determining that the identifier of each of the at least one user equipment does not include a preset identifier; determining the configuration strategy of the working mode of the wireless router as a second configuration strategy, and the second configuration strategy includes at least one of: a remote control mode to be opened and a wireless access parent control mode to be opened.

In one embodiment, determining the configuration strategy of the working mode of the wireless router at least according to the identifier of each of the at least one user equipment includes: determining the configuration strategy of the working mode of the wireless router according to the identifier of each of the at least one user equipment and a change of a signal strength of each of the at least one user equipment accessing the wireless router.

In one embodiment, determining the configuration strategy of the working mode of the wireless router according to the identifier of each of the at least one user equipment and the change of the signal strength of each of the at least one user equipment accessing the wireless router includes: determining that the identifier of each of the at least one user equipment includes a preset identifier and the change of the signal strength mutates from having a wireless access signal to not having the wireless access signal; determining the configuration strategy of the working mode of the wireless router as a third configuration strategy, and the third configuration strategy includes at least one of: a remote control mode to be closed or standby and a wireless access parent control mode to be closed or standby; or, determining that the identifier of each of the at least one user equipment includes a preset identifier and the change of the signal strength is that the signal strength continuously reduces until there is no wireless access signal; determining the configuration strategy of the working mode of the wireless router as a four configuration strategy, and the four configuration strategy includes at least one of: a remote control mode to be opened and a wireless access parent control mode to be opened.

In another embodiment of the present invention, a device for configuring a wireless router is provided, which includes: an acquisition component to acquire an identifier of each of at least one user equipment accessing a wireless router; a determination component to determine a configuration strategy of a working mode of the wireless router at least according to the identifier of each of at least one user equipment, and the working mode at least includes: a remote control mode and a wireless access parent control mode; a configuration component to configure the configuration strategy.

In one embodiment, the determining component includes: a first determining element to determine that the identifier of each of the at least one user equipment includes a preset identifier; a second determining element to determine the configuration strategy of the working mode of the wireless router as a first configuration strategy, and the first configuration strategy includes at least one of: a remote control mode to be closed or standby and a wireless access parent control mode to be closed or standby.

In one embodiment, the determining component includes: a third determining element to determine that the identifier of each of the at least one user equipment does not include a preset identifier; a fourth determining element to determine the configuration strategy of the working mode of the wireless router as a second configuration strategy, and the second configuration strategy includes at least one of: a remote control mode to be opened and a wireless access parent control mode to be opened.

In one embodiment, the determining component is further arranged to determine the configuration strategy of the working mode of the wireless router according to the identifier of each of the at least one user equipment and a change of a signal strength of each of the at least one user equipment accessing the wireless router.

In one embodiment, the determining component includes: a fifth determining element to determine that the identifier of each of the at least one user equipment includes a preset identifier and the change of the signal strength mutates from having a wireless access signal to not having the wireless access signal; a sixth determining element to determine the configuration strategy of the working mode of the wireless router as a third configuration strategy, and the third configuration strategy includes at least one of: a remote control mode to be closed or standby and a wireless access parent control mode to be closed or standby; or, a seventh determination element to determine that the identifier of each of the at least one user equipment includes a preset identifier and the change of the signal strength is that the signal strength continuously reduces until there is no wireless access signal; an eighth determination element to determine the configuration strategy of the working mode of the wireless router as a four configuration strategy, and the four configuration strategy includes at least one of: a remote control mode to be opened and a wireless access parent control mode to be opened.

According to at least some embodiments of the present invention, an identifier of each of at least one user equipment accessing a wireless router is acquired; a configuration strategy of a working mode of the wireless router is determined at least according to the identifier of each of at least one user equipment, and the working mode at least includes: a remote control mode and a wireless access parent control mode; the configuration strategy is configured, so that a problem in the related art that a configuration of a working mode of the wireless router is tedious, which causes inconvenience to user operations is solved, and the complexity degree of configuration of the working mode of the wireless router is reduced, and comfortable experience is brought to users.

### Brief Description of the Drawings

The drawings described here are adopted to provide a further understanding to the present invention, and form a part of the present invention. Schematic embodiments of the present invention and descriptions thereof are adopted to explain the present invention and not intended to form improper limits to the present invention. In the drawings:
Fig. 1 is a flowchart of a method for configuring a wireless router according to a first embodiment of the present invention.
Fig. 2 is a flowchart of a method for configuring a wireless router according to a second embodiment of the present invention.
Fig. 3 is a structural block diagram of a device for configuring a wireless router according to an embodiment of the present invention.
Fig. 4 is a structural block diagram of a device for configuring a wireless router according to an exemplary embodiment of the present invention.
Fig.5 is a flowchart of a method for configuring a wireless router according to an exemplary embodiment of the present invention.

### Detailed Description

The present invention will be described below in detail with reference to the drawings and embodiments. It is important to note that the embodiments in the present invention and characteristics in the embodiments may be combined under the condition of no conflicts.

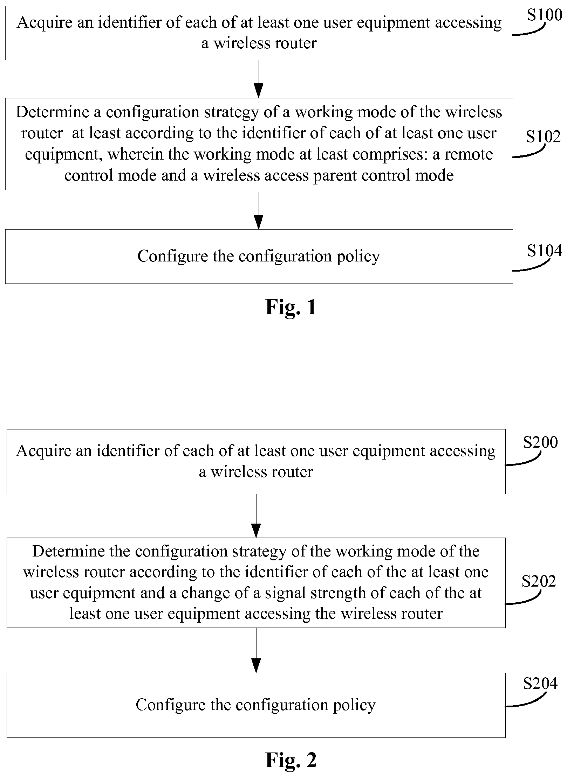

In one embodiment, a method for configuring a wireless router is provided. Fig. 1 is a flowchart of a method for configuring a wireless router according to an embodiment of the present invention. As shown in Fig. 1, the process includes the following steps.

At step S100, an identifier of each of at least one user equipment accessing a wireless router is acquired.

In the case that the user equipment accesses the wireless router, the wireless router captures the identifier of the user equipment. The identifier is an unique identifier, such as a Media Access Control (MAC) address, International Mobile Equipment Identity (IMEI) and the like of a mobile phone, a tablet computer and so on.

At step S102, a configuration strategy of a working mode of the wireless router is determined at least according to the identifier of each of at least one user equipment, and the working mode at least includes: a remote control mode and a wireless access parent control mode.

An identification table of the user equipment is preset in the wireless router. The identification table is used for storing the identifier of the user equipment according to requirements of the user. After the identifier of the user equipment accessing the wireless router is acquired, the identification table of the user equipment is searched to determine a strategy of the working mode of the wireless router. The working mode of the wireless router is at least one advanced control function of the wireless router. The working mode includes at least one of the remote control mode and the wireless access parent control mode. The remote control mode refers to the working mode of controlling the wireless router at a long distance, which is greater than a preset threshold value, between the wireless router and a position where the user is located. The wireless access parent control mode refers to the working mode of a user (such as a parent, with a higher priority than a priority of another user (such as a child at home), conveniently controlling time online of the other user.

At step S104, the configuration policy is configured.

That is, the configuration policy is configured according to the configuration strategy of the working mode of the wireless router determined at the step S102, so as to enable the wireless router to work according to the working mode.

According to the method of this embodiment, under the condition that the user equipment accesses the wireless router, and the identifier of the user equipment accessing the wireless router is acquired to determine the working mode of the wireless router, thereby realizing automatically adjusting the working mode of the wireless router according to the identifier of the user equipment, so that a problem in the related art that a configuration of a working mode of the wireless router is tedious, which causes inconvenience to user operations is solved, and the complexity degree of configuration of the working mode of the wireless router is reduced, and comfortable experience is brought to users.

In an exemplary embodiment, determining the configuration strategy of the working mode of the wireless router at least according to the identifier of each of the at least one user equipment includes: it is determined that the identifier of each of the at least one user equipment includes a preset identifier; the configuration strategy of the working mode of the wireless router is determined as a first configuration strategy. The first configuration strategy includes at least one of: a remote control mode to be closed or standby and a wireless access parent control mode to be closed or standby.

In an exemplary embodiment, determining the configuration strategy of the working mode of the wireless router at least according to the identifier of each of the at least one user equipment includes: it is determined that the identifier of each of the at least one user equipment does not include a preset identifier; the configuration strategy of the working mode of the wireless router is determined as a second configuration strategy. The second configuration strategy includes at least one of: a remote control mode to be opened and a wireless access parent control mode to be opened.

The current wireless router accepts at least one user equipment to access, so as to acquire the identifier of each of the at least one user equipment. An owner of the user equipment including the preset user identifier is an owner of the wireless router or other users with advanced permissions, for example, the user with a qualification or right of operating, controlling and adjusting the working mode of the wireless router. However, in some situations, the user of the user equipment is a visiting friend, a child or other low-authority users of the owner, so that not each of these users and the user equipment of this user can control the working mode of the wireless router. A user equipment identification table is arranged in the wireless router in advance and the identifier of the user equipment is added according to requirements of the user. The user equipment which contains an equipment identifier in the user equipment identification table and the use of this user equipment are qualified or authorized to operate and control the working mode of the wireless router. In the case that the identifier of the user equipment accessing the wireless router includes a preset identifier, the user equipment including the preset identifier and the user of this user equipment, such as the owner of the wireless router or a user with higher user permission, use the wireless router to surfing the internet at a place which is not far away from the wireless router. We imagine a scenario that an owner or a user with a high-authority is using the wireless router at home, or a user is using the wireless router at office and the like. In this situation, a distance between the user equipment including the preset identifier and the user of this user equipment and the wireless router is close to each other and some working modes of the wireless router are not necessary to be opened. That is these working modes (such as at least one of the remote control mode and the wireless access parent control mode) of the wireless router are closed or standby. In the case that the identifier of the user equipment accessing the wireless router does not include a preset identifier, the user equipment including the preset identifier and the user of this user equipment, such as the owner of the wireless router or a user with higher user permission, is far away from the wireless router, such as leaving a home residence, an office area and the like. And other users of the user equipment accessing the wireless router do not have the right and qualification of operating, controlling and adjusting the working mode of the wireless router. In this case, some working modes of the wireless router are necessary to be opened. For example, in case of leaving the home residence, the office area and the like, the user needs to open at least one of the remote control function and the wireless access parent control mode of the wireless router. Certainly, for the user equipment accessing the wireless router or not accessing the wireless router, whether or not the identifier of the user equipment includes the preset user identification, the working modes of the wireless router include closed, standby and open, which are adjusted according to actual requirements of the user. According to the exemplary implementation mode, the requirements of the user for configuring different working modes of the wireless router are met, so that a problem in the related art that a configuration of a working mode of the wireless router is tedious, which causes inconvenience to user operations is solved, and the complexity degree of configuration of the working mode of the wireless router is reduced, and comfortable experience is brought to users.

In one embodiment, another method for configuring a wireless router is provided. Fig. 2 is a flowchart of a method for configuring a wireless router according to an embodiment of the present invention. As shown in FIG. 2, the process includes the following steps.

At step S200, an identifier of each of at least one user equipment accessing a wireless router is acquired.

At step S202, the configuration strategy of the working mode of the wireless router is determined according to the identifier of each of the at least one user equipment and a change of a signal strength of each of the at least one user equipment accessing the wireless router.

At step S204: the configuration policy is configured.

In an exemplary embodiment, determining the configuration policy of the working mode of the wireless router at least according to the identifier of each of the at least one user equipment further includes that: the configuration strategy of the working mode of the wireless router is determined according to the identifier of each of the at least one user equipment and the change of the signal strength of each of the at least one user equipment accessing the wireless router. According to the exemplary implementation mode, the configuration strategy of the wireless router is optimized, and the working mode of the wireless router is determined according to the identifier of each of the at least one user equipment and the change of the signal strength of each of the at least one user equipment accessing the wireless router, so that more comfortable, convenient and humanized experience are brought to the users.

In an exemplary embodiment, determining the configuration strategy of the working mode of the wireless router according to the identifier of each of the at least one user equipment and the change of the signal strength of each of the at least one user equipment accessing the wireless router includes: it is determined that the identifier of each of the at least one user equipment includes a preset identifier and the change of the signal strength mutates from having a wireless access signal to not having the wireless access signal; the configuration strategy of the working mode of the wireless router is determined as a third configuration strategy. The third configuration strategy includes at least one of: a remote control mode to be closed or standby and a wireless access parent control mode to be closed or standby.

Or, it is determined that the identifier of each of the at least one user equipment includes a preset identifier and the change of the signal strength is that the signal strength continuously reduces until there is no wireless access signal; the configuration strategy of the working mode of the wireless router is determined as a four configuration strategy. And the four configuration strategy includes at least one of: a remote control mode to be opened and a wireless access parent control mode to be opened.

The working mode of the wireless router is determined according to the identifier of each of the at least one user equipment and the change of the signal strength of each of the at least one user equipment further includes that: the working mode of the wireless router is determined according to the change situation of the signal strength of each of the at least one user equipment accessing the wireless router.

The wireless router identifies the Received Signal Strength Indication (RSSI) of each access device. When the identifier of each of the at least one user equipment includes the preset identification, the user equipment with this preset identification access the wireless router. The signal strength of the user equipment with this preset identification accessing the wireless router is monitored. When the signal strength of the user equipment is mutated from having the wireless access signal to having no wireless access signal, the RSSI is not continuously reduced but suddenly off-line. And the user equipment is determined to be still in a service range of the wireless router. For example, the user closes the wireless router due to sleep at night or opens a flight mode at home, or the user equipment is restarted when the user equipment breaks down. In these situations, some advanced functions of the wireless router are not be opened and some working modes of the wireless router are determined to be closed or standby. For instance, at least one of the remote control mode and the wireless access parent control mode of the wireless router is closed or standby. When the signal strength of the user equipment is continuously reduced until there is no access signal, the user equipment with the preset identification is far away from the service range of the wireless router until the user equipment cannot access the wireless router.

It can be understood that the scenario is that the user leaves home so as to leave the service range of the wireless router. In these cases, the user wants to open some advanced functions of the wireless router, and some working modes of the wireless router are determined to be opened. For example, after an user leaves home, the wireless router monitors that the signal intensity of the user equipment with the preset identifier gradually decreases to zero, determines that the user equipment exceeds the service range of the wireless router, and opens at least one of the remote control mode and the wireless access parent control mode of the wireless router. In the case that the user equipment accessing the wireless router has the preset identifier, some working modes of the wireless router are closed, standby or opened according to the signal strength change of the user equipment, or adjusted according to the actual requirements of the user. Through above two exemplary implementation manners, the complexity degree of the working mode configuration of the wireless router is further reduced, and more comfortable experience is brought to users.

Another embodiment of the present invention further provides a device for configuring a wireless router. The device is arranged to implement the abovementioned embodiments and exemplary implementation modes, and what has been described will not be elaborated. For example, term "component", used below, is a combination of at least one of software and hardware capable of realizing a preset function. Although the device described in the following embodiment is implemented with software, implementation with hardware or a combination of the software and the hardware is also possible and conceivable.

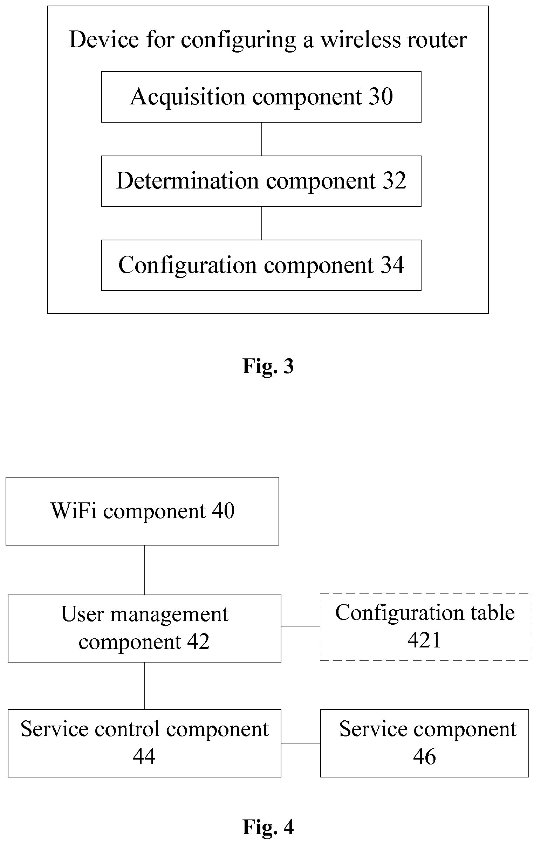

Fig. 3 is a structural block diagram of a device for configuring a wireless router according to an embodiment of the present invention. As shown in Fig. 3, the device includes the following components.

An acquisition component 30 is arranged to acquire an identifier of each of at least one user equipment accessing a wireless router. A determination component 32 is connected with the acquisition component 30 and arranged to determine a configuration strategy of a working mode of the wireless router at least according to the identifier of each of at least one user equipment, and the working mode at least includes: a remote control mode and a wireless access parent control mode. The configuration component 34 is connected with the determination component 32 and arranged to configure the configuration policy.

In an exemplary embodiment, the determination component 32 further includes: a first determining element to determine that the identifier of each of the at least one user equipment includes a preset identifier; a second determining element to determine the configuration strategy of the working mode of the wireless router as a first configuration strategy, and the first configuration strategy includes at least one of: a remote control mode to be closed or standby and a wireless access parent control mode to be closed or standby.

In an exemplary embodiment, the determination component 32 further includes: a third determining element to determine that the identifier of each of the at least one user equipment does not include a preset identifier; a fourth determining element to determine the configuration strategy of the working mode of the wireless router as a second configuration strategy, and the second configuration strategy includes at least one of: a remote control mode to be opened and a wireless access parent control mode to be opened.

In an exemplary embodiment, the determination component 32 is further arranged to determine the configuration strategy of the working mode of the wireless router according to the identifier of each of the at least one user equipment and a change of a signal strength of each of the at least one user equipment accessing the wireless router.

In an exemplary embodiment, the determination component 32 further includes: a fifth determining element to determine that the identifier of each of the at least one user equipment includes a preset identifier and the change of the signal strength mutates from having a wireless access signal to not having the wireless access signal; a sixth determining element to determine the configuration strategy of the working mode of the wireless router as a third configuration strategy, and the third configuration strategy includes at least one of: a remote control mode to be closed or standby and a wireless access parent control mode to be closed or standby;
or, a seventh determination element to determine that the identifier of each of the at least one user equipment includes a preset identifier and the change of the signal strength is that the signal strength continuously reduces until there is no wireless access signal; an eighth determination element to determine the configuration strategy of the working mode of the wireless router as a four configuration strategy, and the four configuration strategy includes at least one of: a remote control mode to be opened and a wireless access parent control mode to be opened.

According to the device of this embodiment, under the condition that the user equipment accesses the wireless router, and the identifier of the user equipment accessing the wireless router is acquired to determine the working mode of the wireless router, thereby realizing automatically adjusting the working mode of the wireless router according to the identifier of the user equipment, so that a problem in the related art that a configuration of a working mode of the wireless router is tedious, which causes inconvenience to user operations is solved, and the complexity degree of configuration of the working mode of the wireless router is reduced, and comfortable experience is brought to users.

It should be noted that functions of the first determination element, the second determination element, the third determination element, a fourth determining element, a fifth determining element, a sixth determining element, a seventh determining element and an eighth determining element are the same or similar and are implemented by the same element, device and hardware or implemented by different elements, devices and hardware.

The contents of the present invention are described in conjunction with exemplary embodiments below.

Fig. 4 is a structural block diagram of a device for configuring a wireless router according to an exemplary embodiment of the present invention. As shown in Fig. 4, the device includes the following components.

A function implemented by a Wireless Fidelity (WiFi) component 40 is the same as or similar to the function implemented by the acquisition component 30. The wireless router serves as a WiFi access point (AP). And the WiFi component is a basic attribute of the wireless router and responsible for correlation and communication with a station (STA) of the user equipment. The WiFi component is used for identifying an MAC address of each STA, identifying a state (associated or unassociated) of each STA and identifying a signal strength of each STA. In this way, the wireless router determines that when the STA is associated with the AP, the STA is within the service range of the wireless router and when the STA is not associated with the AP, the STA is out of the service range of the wireless router or the STA is closed or standby.

Furthermore, the WiFi component 40 is further arranged to introduce a further optimization of the RSSI. When the STA is in an associated state, that is the user equipment accesses the wireless router and the RSSI is not continuously reduced but suddenly off-line, the STA is determined to still be in the service range of the wireless router. For example, a possible scenario is that an user sleeps at night and a mobile phone is closed or in a flight mode. When the STA is in an associated state and the RSSI is continuously reduced until off-line, the STA is determined to gradually leave the service range of the router. For example, a possible scenario is that the user leaves the wireless router at home.

A user management component 42 is connected with the WiFi component 40, and the function implemented by the user management component is the same as or similar to the determination component 32 mentioned in the above embodiment. The user management component is arranged to provide a configuration entry of inputting the identification (such as the MAC address) of the user equipment, and meanwhile, match with the STA MAC recognized by the WiFi component 40 to determine whether the position where the user equipment is located is within the service range of the wireless router. The user management component also supports the multi-user configuration and is arranged to accurately determine which STAs and the user of each STA are within the service range of the wireless router, and which STAs and the user of each STA are out of the service range of the wireless router, thereby supporting a service configuration scenario with accurate determination requirements.

Furthermore, the user management component 42 further includes a configuration table 421. The user presets a table so as to adjust and control the working mode of the wireless router according to whether the STA with the preset identifier is within the range of the wireless router; or, adjust and control the working mode of the wireless router according to whether the STA without the preset identifier is within the range of the wireless router; or other more elaborate functional grouping.

A service control component 44 is connected with the user management component 42, and the function implemented by the service control component is the same as or similar to the configuration component 34 mentioned in the above embodiment. The service control component is arranged to acquire whether the user equipment is within the service range of the wireless router through the user management component 42, search a configuration table 421 according to the identification of the user equipment so as to call a function interface of a corresponding service component, thereby realizing an automatic configuration of the wireless router.

A service component 46 is connected with the service control component 44 and arranged to provide an interface for opening or closing or more accurate control, and this interface is provided to the service control component 44 for calling. The service component 46 includes advanced functions (such as the remote control mode or the wireless access parent control mode and the like) of the working mode of the wireless router.

The device for configuring the wireless router is based on wireless access correlation and signal intensity change technologies, and the service scene is automatically determined in combination with user identity recognition, so that the operation of automatically opening or closing the preset service function of the wireless router is carried out.

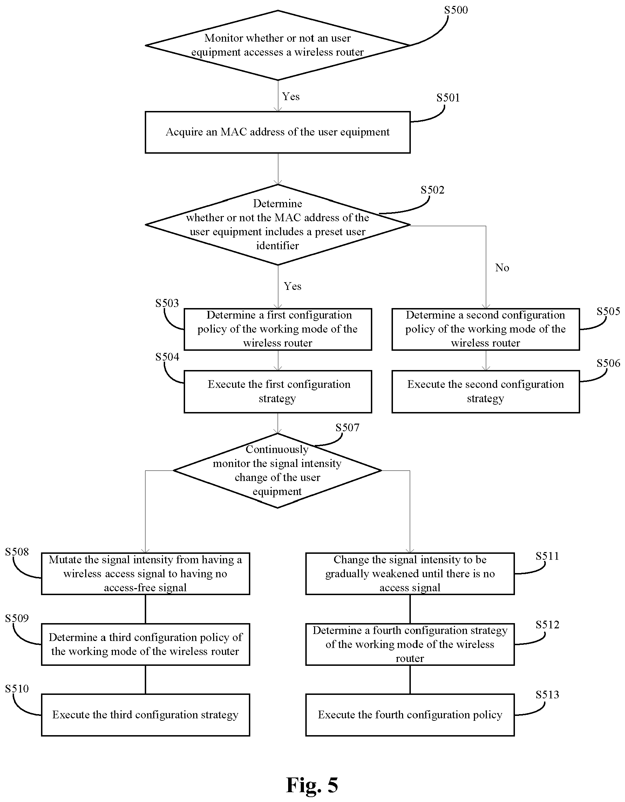

Fig. 5 is a flowchart of a method for configuring a wireless router according to an exemplary embodiment of the present invention. As shown in Fig. 5, the process includes the following steps.

At step S500: monitor whether or not an user equipment accesses a wireless router.

The user and the user equipment of the user are close to and enter the coverage range of the wireless router. In general, the user selects to connect with the wireless router and inputs an access authentication password. The wireless router allocates an IP address for the user so that the user equipment accesses the wireless router to use a wireless internet surfing function. Certainly, under the condition that the user equipment once accessed the wireless router or a password is not configured by the wireless router, the user equipment accesses the wireless router without inputting the access authentication password on the user equipment.

At step S501: acquire an MAC address of the user equipment.

The user equipment accesses the wireless router. The wireless router obtains the MAC address of the user equipment.

At step S502: determine whether or not the MAC address of the user equipment includes a preset user identifier.

In a period of time, at least one user equipment accesses the wireless router. The wireless router acquires the MAC address of each of the at least one user equipments. An operation authority to the wireless router of each of the at least one user equipment and the user of the user equipment is different. Whether the MAC address of each of the at least one user equipment includes the preset user identifier is determined.

In the case that the MAC address of each of the at least one user equipment does not include the preset user identifier, step S503 is executed.

At step S503: determine a first configuration policy of the working mode of the wireless router.

At step S504: execute the first configuration strategy.

In the case that the MAC address of each of the at least one user equipment does not include the preset user identifier, the user equipment with the preset user identifier is not within the coverage range of the wireless router. For example, a possible scenario is that the owner leaves the home or the office area and the like. In this case, the first configuration strategy of the working mode of the wireless router is determined, which includes that at least one of the remote control mode and the wireless access parent control mode of the wireless router are opened. The first configuration strategy is executed. That is, opening at least one of the remote control mode and the wireless access parent control mode is realized.

In the case that the MAC address of each of the at least one user equipment includes the preset user identifier, step S503 is executed.

At step S505: determine a second configuration policy of the working mode of the wireless router.

At step S506: execute the second configuration strategy.

In the case that the MAC address of each of the at least one user equipment includes the preset user identifier, the user equipment with the preset user identifier enters the coverage range of the wireless router. For example, a possible scenario is that the owner goes back home or go back to the office area and the like. In this case, since there is no need to open some functions of the wireless router by the user, the second configuration strategy of the working mode of the wireless router is determined, which includes that at least one of the remote control mode and the wireless access parent control mode of the wireless router is closed or standby. The second configuration strategy is executed. That is, at least one of the remote control mode and the wireless access parent control mode is closed or standby.

Step S507 is executed after the step S506, so as to continuously monitor the signal intensity change of the user equipment.

The wireless router identifies the signal strength of each STA. After the user equipment with the preset user identifier accesses the wireless router, the wireless router determines and executes the second configuration policy so as to continuously monitor the signal intensity change of the user equipment. After the user equipment accesses the wireless router, the signal strength of the user equipment changes at any time. The signal strength is affected by a distance change between the user equipment and the wireless router, barrier and the like.

At step S508: mutate the signal intensity from having a wireless access signal to having no access-free signal.

At step S509: determine a third configuration policy of the working mode of the wireless router.

At step S510: execute the third configuration strategy.

The signal intensity of the user equipment is mutated from having a wireless access signal to having no access-free signal. A possible scenario is that before the user has a rest, sleeps and the like, the user closes a Wireless Local Area Network (WLAN) of the user equipment. The user and the user equipment of the user are still within the coverage range of the wireless router. In this case, the user has no need and necessary to open some functions of the wireless router. The third configuration strategy of the working mode of the wireless router is determined, which includes that at least one of the remote control mode and the wireless access parent control mode of the wireless router are closed or standby. The third configuration strategy is executed. That is, at least one of the remote control mode and the wireless access parent control mode is closed or standby. It should be noted that the first configuration policy and the third configuration policy are the same configuration policy.

At step S511: change the signal intensity to be gradually weakened until there is no access signal.

At step S512: determine a fourth configuration strategy of the working mode of the wireless router.

At step S513: execute the fourth configuration policy.

The signal intensity of the user equipment is mutated from having a wireless access signal to having no access-free signal. A possible scene is under the condition that the user carrying the user equipment of the user leaves the coverage range of the wireless router, the signal intensity of the user equipment is changed to be gradually weakened until there is no access signal. In this case, since the user requires to open some functions of the wireless router by the user, the fourth configuration strategy of the working mode of the wireless router is determined, which includes that at least one of the remote control mode and the wireless access parent control mode of the wireless router is opened. The fourth configuration strategy is executed. That is, at least one of the remote control mode and the wireless access parent control mode is opened. It should be noted that the second configuration policy and the fourth configuration policy are the same configuration policy.

The first exemplary embodiment is that the owner of one wireless router goes back home, the wireless router automatically closes at least one of the remote control function and the wireless access parent control function.

A MAC address of a mobile phone of the owner is set as a preset user equipment identifier on a wireless router console, and an associated state is set. Under the condition that the identifier of the user equipment acquired by the wireless router includes a preset identifier, the remote control function and wireless access parent control function of the wireless router are automatically closed or standby. Under the condition that the identifier of the user equipment acquired by the wireless router does not include the preset identifier, at least one of the remote control function and wireless access parent control function of the wireless router is automatically opened.

The method includes the following steps.

At step 1, the wireless router acquires a MAC address of a mobile phone.

The wireless router detects an MAC address of an associated STA. When the owner goes back home, the mobile phone carried by the owner is automatically connected with the wireless router at home. The wireless router obtains the MAC address of the mobile phone.

At step 2, a user equipment identifier preset by the wireless router is matched according to the MAC address of the mobile phone.

Multiple user equipment accesses the wireless router at the same time, and not any user and the user equipment of the user have a permission of operating and controlling at least one of the remote control function and the wireless access parent control function of the wireless router. The wireless router searches and matches the obtained user equipment identifier with the preset user equipment identifier.

At step 3, when the matching is successful, the user management component 42 sets the wireless router to be a state of the owner staying at home.

According to the matching result, the MAC address of the owner mobile phone is the preset user identifier. The wireless router detects the MAC address of the associated STA to search a user table and finds the owner identification so that the wireless router is set to be a working mode of the owner staying at home.

At step 4, a configuration strategy of the working mode of the wireless router is determined according to the state of the owner staying at home.

The configuration table 421 in the user management component 42 is inquired, and an associated state is inquired according to the state of the owner staying at home. When the identifier of the user equipment acquired by the wireless router includes a preset identifier, the configuration strategy of the working mode of the wireless router is determined as at least one of a remote control function and a wireless access parent control function to be automatically closed or standby.

At step 5, the configuration strategy of the wireless router is executed.

The service control component 44 calls a working mode interface of the corresponding service component 46, and closes at least one of the remote control function and the wireless access parent control function, so as to enable at least one of the remote control function and the wireless access parent control function to be automatically closed or standby.

Through the above process, advanced functions of the wireless router are automatically and intelligently configured after the user goes back home, and the user does not participate in this process and has no sense.

The exemplary second embodiment is that a family owner leaves home, the wireless router automatically opens at least one of a remote control function and a wireless access parent control function.

A MAC address of a mobile phone of the owner is set as a preset user equipment identifier on a wireless router console, and an associated state is set. Under the condition that the identifier of the user equipment acquired by the wireless router includes a preset identifier, the remote control function and wireless access parent control function of the wireless router are automatically closed or standby. Under the condition that the identifier of the user equipment acquired by the wireless router does not include the preset identifier, at least one of the remote control function and wireless access parent control function of the wireless router is automatically opened.

Before the owner leaves the home, the wireless router obtains the MAC address of the owner mobile phone, determines that the MAC address of the mobile phone is a preset user equipment identifier of the wireless router, and closes the remote control mode.

The method includes the following steps.

At step 1, the wireless router monitors that the strength of a wireless access signal corresponding to a mobile phone of the owner is continuously reduced until there is no access signal.

The wireless router monitors the RSSI corresponding to the STA accessing the wireless router. When the owner carrying the mobile phone leaves the home, the mobile phone is gradually far away from the service range of the wireless router, the signal strength RSSI of the mobile phone is gradually reduced, and finally in an off-line state.

At step 2, the user management component 42 sets the wireless router to be in a state of the owner leaving the home.

When the owner carrying the mobile phone is far away the service range of the wireless router, the wireless router does not acquire the MAC address of the mobile phone. If a preset user identification is not detected by the wireless router, the owner is determined to leave the home, and the wireless router is set to be in the state of the owner leaving the home.

At step 3, a configuration strategy of a working mode of the wireless router is determined according to the state of the owner leaving the home of the wireless router.

The configuration table 421 in the user management component 42 is queried, and an associated state is queried according to the state of the owner leaving the home. In the case that the identifier of the user equipment acquired by the wireless router does not include a preset identifier, the configuration strategy of the working mode of the wireless router is determined, which includes an open of the wireless access parent control mode of the wireless router.

At step 4, a configuration strategy of the wireless router is executed.

The service control component 44 calls a working mode interface of the corresponding service component 46, and opens the remote control function and the wireless access parent control function, so as to enable the wireless router to open the remote control working mode and the wireless access parent control working mode.

In conclusion, the embodiments of the present invention have the following characteristics: the identification of the user is determined according to the identifier of the user equipment and some preset functions of the wireless router are automatically opened or closed or advanced functions of the wireless router are configured according to the position, which is not required to be accurate, of the user determined by the characteristics of the WiFi association, off-line or signal strength of the wireless router and the like, so that the user does not participate in this process and has no sense when the operation of frequent switching setting based on whether the user and the equipment of the user are located in the coverage range of the wireless router, thereby greatly improving the efficiency and the user experience.

Obviously, those skilled in the art should know that each component or each step of the present invention is implemented by a universal computing device, and the components or steps are concentrated on a single computing device or distributed on a network formed by a plurality of computing devices, and are optionally implemented by program codes executable for the computing devices, so that the components or steps are stored in a storage device for execution with the computing devices. The shown or described steps are executed in sequences different from those described here in some circumstances, or form each integrated circuit component respectively, or multiple components or steps therein may form a single integrated circuit component for implementation. As a consequence, the present invention is not limited to any specific hardware and software combination.

The above are the exemplary embodiments of the present invention and not intended to limit the present invention. For those skilled in the art, the present invention may have various modifications and variations. Any modifications, equivalent replacements, improvements and the like made within the scope of the present invention as defined in the appended claims shall fall within the scope of protection of the present invention.

### Industrial Applicability

As mentioned above, at least some embodiments of the present invention provide a method and device for configuring a wireless router, the wireless router has the beneficial effects as follows: a problem in the related art that a configuration of a working mode of the wireless router is tedious, which causes inconvenience to user operations is solved, and the complexity degree of configuration of the working mode of the wireless router is reduced, and comfortable experience is brought to users.

## Claims

1. A method for configuring a wireless router, comprising:
acquiring an identifier of each of at least one user equipment accessing a wireless router;
determining a configuration strategy of a working mode of the wireless router at least according to the identifier of each of at least one user equipment, wherein the working mode at least comprises: a remote control mode and a wireless access parent control mode;
configuring the configuration strategy.

2. The method as claimed in claim 1, wherein determining the configuration strategy of the working mode of the wireless router at least according to the identifier of each of the at least one user equipment comprises:
determining that the identifier of each of the at least one user equipment comprises a preset identifier;
determining the configuration strategy of the working mode of the wireless router as a first configuration strategy, wherein the first configuration strategy comprises at least one of: a remote control mode to be closed or standby and a wireless access parent control mode to be closed or standby.

3. The method as claimed in claim 1, wherein determining the configuration strategy of the working mode of the wireless router at least according to the identifier of each of the at least one user equipment comprises:
determining that the identifier of each of the at least one user equipment does not comprise a preset identifier;
determining the configuration strategy of the working mode of the wireless router as a second configuration strategy, wherein the second configuration strategy comprises at least one of: a remote control mode to be opened and a wireless access parent control mode to be opened.

4. The method as claimed in claim 1, wherein determining the configuration strategy of the working mode of the wireless router at least according to the identifier of each of the at least one user equipment comprises:
determining the configuration strategy of the working mode of the wireless router according to the identifier of each of the at least one user equipment and a change of a signal strength of each of the at least one user equipment accessing the wireless router.

5. The method as claimed in claim 4, wherein determining the configuration strategy of the working mode of the wireless router according to the identifier of each of the at least one user equipment and the change of the signal strength of each of the at least one user equipment accessing the wireless router comprises:
determining that the identifier of each of the at least one user equipment comprises a preset identifier and the change of the signal strength mutates from having a wireless access signal to not having the wireless access signal;
determining the configuration strategy of the working mode of the wireless router as a third configuration strategy, wherein the third configuration strategy comprises at least one of: a remote control mode to be closed or standby and a wireless access parent control mode to be closed or standby;
or, determining that the identifier of each of the at least one user equipment comprises a preset identifier and the change of the signal strength is that the signal strength continuously reduces until there is no wireless access signal;
determining the configuration strategy of the working mode of the wireless router as a four configuration strategy, wherein the four configuration strategy comprises at least one of: a remote control mode to be opened and a wireless access parent control mode to be opened.

6. A device for configuring a wireless router, comprising:
an acquisition component to acquire an identifier of each of at least one user equipment accessing a wireless router;
a determination component to determine a configuration strategy of a working mode of the wireless router at least according to the identifier of each of at least one user equipment, wherein the working mode at least comprises: a remote control mode and a wireless access parent control mode;
a configuration component to configure the configuration strategy.

7. The device as claimed in claim 6, wherein the determining component comprises:
a first determining element to determine that the identifier of each of the at least one user equipment comprises a preset identifier;
a second determining element to determine the configuration strategy of the working mode of the wireless router as a first configuration strategy, wherein the first configuration strategy comprises at least one of: a remote control mode to be closed or standby and a wireless access parent control mode to be closed or standby.

8. The device as claimed in claim 6, wherein the determining component comprises:
a third determining element to determine that the identifier of each of the at least one user equipment does not comprise a preset identifier;
a fourth determining element to determine the configuration strategy of the working mode of the wireless router as a second configuration strategy, wherein the second configuration strategy comprises at least one of: a remote control mode to be opened and a wireless access parent control mode to be opened.

9. The device as claimed in claim 6, wherein the determining component is further arranged to determine the configuration strategy of the working mode of the wireless router according to the identifier of each of the at least one user equipment and a change of a signal strength of each of the at least one user equipment accessing the wireless router.

10. The device as claimed in claim 9, wherein the determining component comprises:
a fifth determining element to determine that the identifier of each of the at least one user equipment comprises a preset identifier and the change of the signal strength mutates from having a wireless access signal to not having the wireless access signal;
a sixth determining element to determine the configuration strategy of the working mode of the wireless router as a third configuration strategy, wherein the third configuration strategy comprises at least one of: a remote control mode to be closed or standby and a wireless access parent control mode to be closed or standby;
or, a seventh determination element to determine that the identifier of each of the at least one user equipment comprises a preset identifier and the change of the signal strength is that the signal strength continuously reduces until there is no wireless access signal;
an eighth determination element to determine the configuration strategy of the working mode of the wireless router as a four configuration strategy, wherein the four configuration strategy comprises at least one of: a remote control mode to be opened and a wireless access parent control mode to be opened.
